# EUROPEAN PATENT SPECIFICATION

(11) **EP 3 778 289 B1**
(45) Date of publication and mention of the grant of the patent: **26.10.2022**
(21) Application number: 19777615.6
(22) Date of filing: 04.02.2019
(51) Int. Cl.: B60L 15/40, B61L 3/00, B61L 27/20, B60L 3/08, B61L 27/30, B61L 27/40, B61L 15/00, B61L 23/16

(54) **TRAIN CONTROL SYSTEM AND TRAIN CONTROL METHOD**
ZUGSTEUERUNGSSYSTEM UND ZUGSTEUERUNGSVERFAHREN
SYSTÈME DE COMMANDE DE TRAIN ET PROCÉDÉ DE COMMANDE DE TRAIN

(30) Priority: 26.03.2018 JP 2018059090
(43) Date of publication of application: 17.02.2021
(73) Proprietor: Hitachi, Ltd., Tokyo 100-8280 (JP)
(72) Inventor: UKAJI, Fumiaki, Tokyo 100-8280 (JP); ISHIKAWA, Tomohiro, Tokyo 100-8280 (JP)
(74) Representative: Mewburn Ellis LLP
(86) International application number: PCT/JP2019/003928
(87) International publication number: WO 2019/187642

(56) References cited:
- EP-A1- 2 832 581
- WO-A1-2013/047427
- JP-A- 2012 080 645
- US-B2- 6 732 023

## Description

### Technical Field

The present invention relates to a train control system and a train control method and is suitable to be applied to a train control system and a train control method that control a train operated in accordance with a safety system.

### Background Art

Conventionally, trains have been operated in accordance with a safety system for determining allowable speeds of the trains. As examples of the safety system, there are automatic train control (ATC), communications-based train control (CBTC), and the like.

When a train travels across sections for two different safety systems, it is necessary that a changeover section in which the train can receive a signal be provided and a train control system change over between the safety systems in this changeover section. In this case, in the conventional train control method, when speed patterns vary for the safety systems, and the speed of the train exceeds or is close to the speed pattern of the safety system after the changeover, it is necessary that an unplanned brake (so-called emergency brake) be output. In addition, the speed of the train may exceed the speed pattern even when the brake is output.

For example, Patent Literature 1 discloses an automatic train operation device for railway vehicles that uses a fixed point stop control method to change a speed pattern. Patent Literature 1 discloses that, according to the fixed point stop control method, a speed pattern is changed over to a target deceleration pattern indicating deceleration lower than that in a normal state in order to suppress slipping when it rains or snow falls.

The document EP 2 754 583 A1 discloses a train control system with an on-board device mounted on a train to control the speed of the train and the like based on train control information received from ground-side equipment. The system performs control of the speed in the transition between two safety control systems.

### Citation List

### Patent Literature

Patent Literature 1: Japanese Unexamined Patent Application Publication No. 2009-027784

### Summary of Invention

### Technical Problem

However, in the case where the fixed-point stop control method disclosed in Patent Literature 1 is applied to changeover between safety systems, depending on the position of a train, even when deceleration of a speed pattern for a safety system before the changeover is changed, there is a problem that an unplanned brake (emergency brake) is output upon the changeover between the safety systems unless a speed pattern for the safety system after the changeover is moved to an inward side with respect to the speed pattern for the safety system before the changeover. In addition, when the changeover is performed, and the speed of the train is close to the speed pattern, there is a possibility that a brake may need to be output.

In addition, in the conventional safety system changeover method, a difference between the speed patterns before and after the changeover between the safety systems is not considered, and when the speed of the train is higher than the speed pattern after the changeover, there is a problem that an unplanned brake (emergency brake) is output at the time of the changeover between the safety systems.

The invention has been devised in consideration of the foregoing points and proposes a train control system and a train control method that can change over between safety systems without outputting an unplanned brake.

### Solution to Problem

To solve the foregoing problems, according to the invention, a train control system that controls a train in accordance with speed patterns indicating relationships between a traveling position of the train that travels on a track and a speed limit at the traveling position is provided. The speed patterns are set for respective safety systems having control ranges allocated to the track. The safety systems include a first safety system having a first speed pattern and a second safety system having a second speed pattern. When the safety system used to control the train is to be changed over from the first safety system to the second safety system at a first position within a control section in which the control ranges overlap each other, and the speed limit of the first speed pattern and the speed limit of the second speed pattern compete with each other at the first position, the train control system changes the first speed pattern so that a speed limit at a second position ahead of the first position within the overlapping control section is equal to or lower than the speed limit of the second speed pattern. After the first speed pattern after the change is applied, the train control system changes over the safety system from the first safety system to the second safety system.

In addition, to solve the foregoing problems, according to the invention, a train control method for controlling a train in accordance with speed patterns indicating relationships between a traveling position of the train that travels on a track and a speed limit at the traveling position is provided. The speed patterns are set for respective safety systems having control ranges allocated to the track. The safety systems include a first safety system having a first speed pattern and a second safety system having a second speed pattern. When the safety system used to control the train is to be changed over from the first safety system to the second safety system at a first position within a control section in which the control ranges overlap each other, and the speed limit of the first speed pattern and the speed limit of the second speed pattern compete with each other at the first position, the train control method includes a speed pattern change step of changing the first speed pattern so that a speed limit at a second position ahead of the first position within the overlapping control section is equal to or lower than the speed limit of the second speed pattern, and a safety system changeover step of, after the first speed pattern after the change is applied, changing over from the first safety system to the second safety system.

### Advantageous Effects of Invention

According to the invention, it is possible to change over between safety systems without outputting an unplanned brake.

### Brief Description of Drawings

Fig. 1 is a diagram illustrating a schematic configuration of a train control system according to an embodiment of the invention.
Fig. 2 is a flowchart illustrating an example of a process procedure for a safety system changeover process according to the invention.
Fig. 3 is a diagram describing a first change method for changing a speed pattern in safety system changeover.
Fig. 4 is a diagram describing a second change method for changing the speed pattern in the safety system changeover.

### Description of Embodiment

An embodiment of the invention is described with reference to the drawings.

### (1) Configuration of Train Control System

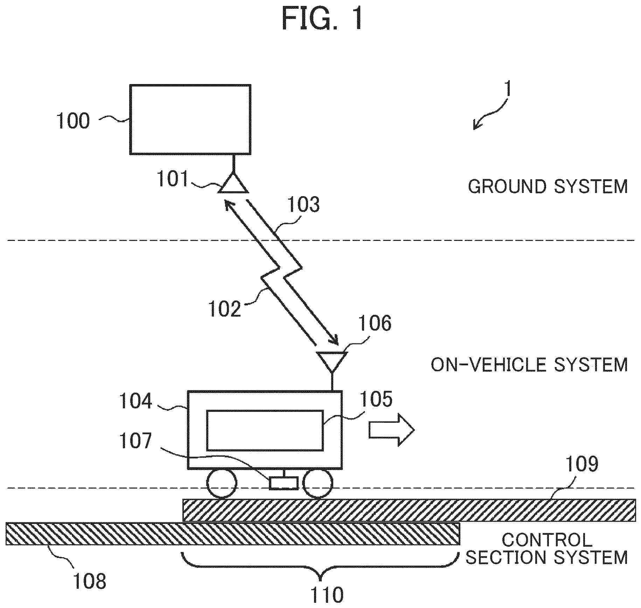

Fig. 1 is a diagram illustrating a schematic configuration of a train control system according to an embodiment of the invention. As illustrated in Fig. 1, a control system for a train control system 1 is composed of a ground system, an on-vehicle system, and a control section system.

The ground system includes a ground control device 100 and a ground-side antenna 101 and controls a train 104 in accordance with a safety system.

The on-vehicle system includes the train 104, an on-vehicle control device 105, an on-vehicle-side antenna 106, and a track circuit signal receiving device 107 and operates the train 104 while transmitting and receiving train position information described later, a target stop position information, and the like to and from the ground system.

The control section system includes a first control range 108 to be controlled by a first safety system and a second control range 109 to be controlled by a second safety system different from the first safety system. The first control range 108 and the second control range 109 indicate the control ranges of the safety systems, while the control ranges are allocated to a track on which the train 104 travels. The safety systems have respective "speed patterns" in which traveling speeds, acceleration and deceleration timing, and the like are set. The train 104 is operated in accordance with a speed pattern of a safety system being controlled. The speed patterns specifically indicate relationships between the position of the train 104 and a speed limit at the position.

Fig. 1 illustrates the case where the train 104 travels from the first control range 108 side to the second control range 109 side. In addition, as a range in which the first control range 108 and the second control range 109 overlap each other, a changeover section 110 is illustrated.

The train 104 can receive both signals of the first and second safety systems during the traveling in the changeover section 110. Therefore, the train control system 1 (ground control device 100) needs to change over the safety system for controlling the train 104 in the changeover section 110.

In the first control range 108 and the second control range 109, the control of the train 104 by the ground control device 100 is executed based on the recognition, executed using a track circuit or a wireless technology, of the position of the train 104. In a control range in which the track circuit is used, a track circuit signal from which the position of the train 104 can be detected is transmitted.

Specifically, in train control (corresponding to train control in the second control range 109 in an example described later) by the track circuit, the track circuit signal is transmitted from the ground system to the on-vehicle control device 105 via the track circuit signal receiving device 107. The track circuit signal is also received by the ground control device 100. Therefore, the ground system (ground control device 100) can recognize train position information and control the train 104.

Next, in train control (corresponding to train control in the first control range 108 in the example described later) by the wireless technology, the on-vehicle system transmits train information 102 to the ground system via the on-vehicle-side antenna 106. The train information 102 is various information on the train 104 and includes the train position information indicating the position of the train 104. Therefore, the ground system (ground control device 100) can recognize the train position information.

In addition, the on-vehicle system receives control information 103 from the ground system via the ground-side antenna 101. The control information 103 is various information necessary to control the train 104 and includes information (target stop position information) indicating a target position at which the train 104 is to be stopped. In addition, in the changeover section 110, information (safety system changeover information) indicating an instruction to start the changeover between the safety systems is also included in the control information 103. Then, the on-vehicle system (on-vehicle control device 105) determines a target stop position of the train 104 based on the target stop position information included in the control information 103 and executes a process of changing over between the safety systems based on the safety system changeover information. Specifically, the on-vehicle system operates the train 104 based on the control by the ground system.

### (2) Safety System Changeover Process

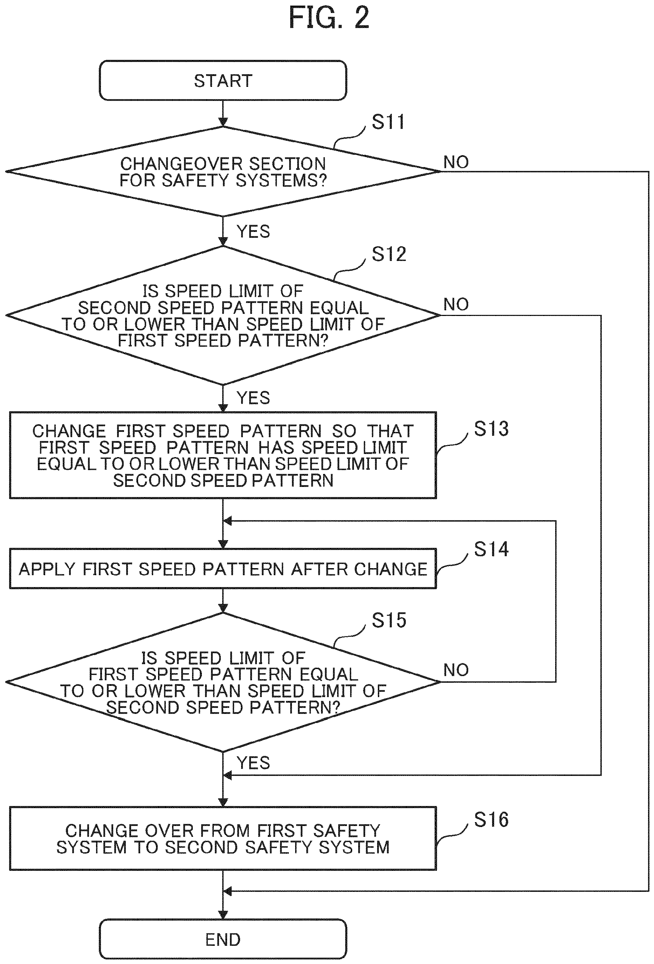

Fig. 2 is a flowchart illustrating an example of a process procedure for the safety system changeover process according to the present embodiment. The safety system changeover process is a process of changing over from the first safety system to the second safety system in a time period for which the train 104 travels from the first control range 108 toward the second control range 109 in the changeover section 110. The safety system changeover process is executed by the on-vehicle control device 105.

Based on Fig. 2, first, the on-vehicle control device 105 determines whether the on-vehicle control device 105 has received the safety system changeover information from the ground control device 100 or whether the train 104 exists in the changeover section 110 (step S11). When the on-vehicle control device 105 has received the safety system changeover information (Yes in step S11), the process proceeds to step S12. This case means that the train 104 exists in the changeover section 110 and thus the changeover between the safety systems needs to be progressed. On the other hand, when the on-vehicle control device 105 has not received the safety system changeover information (No in step S11), this case means that the train 104 does not exist in the changeover section 110 and thus the changeover between the safety systems does not need to be executed, and the process is terminated.

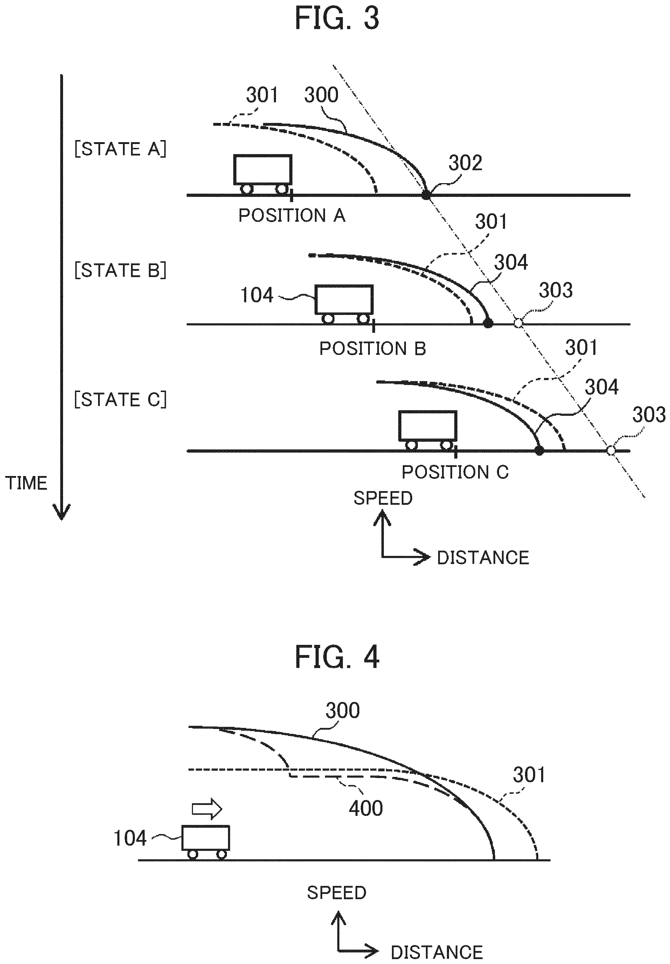

In step S12, the on-vehicle control device 105 compares a speed pattern (first speed pattern 300 illustrated in Fig. 3) of the first safety system with a speed pattern (second speed pattern 301 illustrated in Fig. 3) of the second safety system and determines whether a speed limit of the second speed pattern 301 is equal to or lower than a speed limit of the first speed pattern 300 at the current position (for example, a position A illustrated in Fig. 3) of the train 104. When the speed limit of the second speed pattern 301 is equal to or lower than the speed limit of the first speed pattern 300 (Yes in step S12), the process proceeds to step S13. When the speed limit of the second speed pattern 301 is higher than the speed limit of the first speed pattern 300 (No in step S12), the process proceeds to step S16.

In step S13, the on-vehicle control device 105 changes the first speed pattern 300 so that the first speed pattern 300 has a speed limit equal to or lower than the speed limit of the second speed pattern 301 at a position (for example, a position C illustrated in Fig. 3 described later) ahead of the current position within the changeover section 110, and the process proceeds to step S14. As specific methods for changing the first speed patter 300 in step S13, a "first change method" for modifying the original first speed pattern 300 itself and a "second change method" for generating a new speed pattern different from the original first speed pattern 300 are considered. Details are described later using Figs. 3 and 4. To distinguish the "first speed patterns after the changes" by the change methods from each other, the first speed pattern changed by the first change method is referred to as a "first speed pattern 304 after the modification" and the first speed pattern changed by the second change method is referred to as a "third speed pattern 400".

In step S14, the on-vehicle control device 105 applies the first speed pattern (first speed pattern 304 after the modification or the third speed pattern 400) changed in step S13, and the process proceeds to step S15.

Since the train 104 travels during the execution of the processes of steps illustrated in Fig. 2, the position of the train 104 changes little by little. To explain this using Fig. 3 described later, it is assumed that the train 104 exists at the position A at the time of step S12 (in a state A), and after that, the train 104 is located at the position B at the time of step S14 (in a state B) and located at the position C at the time of step S15 (in a state C). It is assumed that the positions A to C are within the changeover section 110.

In step S15, the on-vehicle control device 105 determines whether the speed limit of the first speed pattern (or the first speed pattern after the change) applied in step S14 is equal to or lower than the speed limit of the second speed pattern 301 at the current position (position C illustrated in Fig. 3) of the train 104. When the speed limit of the first speed pattern after the change is equal to or lower than the speed limit of the second speed pattern 301 (Yes in step S15), the process proceeds to step S16. When the speed limit of the first speed pattern after the change is higher than the speed limit of the second speed pattern 301 (No in step S15), the process returns to step S14.

In step S16, the on-vehicle control device 105 changes over from the first safety system to the second safety system and terminates the safety system changeover process after the changeover. The process of step S15 is a process of confirming whether the speed limit of the current speed pattern does not exceed the speed limit of the second speed pattern 301 when the train 104 travels to some extent after the first speed pattern after the change is applied. Only when the answer to the determination in this process is YES, the on-vehicle control device 105 changes over between the safety systems (step S16). Therefore, the changeover between the safety systems can be safely executed.

To give a supplementary description, step S16 is executed when the answer to the determination of step S12 is NO or when the answer to the determination of step S15 is YES. The former case means a state in which the first speed pattern 300 is on the inward side with respect to the second speed pattern 301. The latter case means a state in which the first speed pattern 300 is moved to the inward side with respect to the second speed pattern 301 since the first speed pattern after the change is applied. Therefore, in each of the cases, the first safety system can be safely changed over to the second safety system, the speed of the train does not exceed the speed limit of the speed pattern before and after the changeover between the safety systems, and an unplanned brake (emergency brake) is not output.

The process procedure for the safety system changeover process according to the present embodiment is described above. Next, an operation of changing over between the safety systems by the foregoing process is described.

This description assumes that, as an example, the first safety system for controlling the first control range 108 is a moving block system using the wireless technology and that the second safety system for controlling the second control range 109 is a fixed block system using the track circuit. Although a specific description of another combination of different safety systems is omitted, the same effects as those described below can be expected in each of the cases.

First, under control by the first safety system, the control information 103 including the safety system changeover information is transmitted from the ground system (ground control device 100). Upon receiving the safety system changeover information, the on-vehicle system (on-vehicle control device 105) starts the foregoing safety system changeover process, thereby starting the operation of changing over between the safety systems.

In this case, if the safety system is changed over in the changeover section 110, there is a possibility that the speed of the train 104 may exceed the speed limit of the speed pattern and that an unplanned brake (emergency brake) may be output.

Therefore, the first speed pattern 300 is changed so that the first speed pattern 300 has a speed limit equal to or lower than the speed limit of the second speed pattern 301 at the position of the train 104 in the changeover section 110 (corresponding to step S13 illustrated in Fig. 2).

As the changing of the first speed pattern 300, a plurality of change methods are considered as described using step S13 illustrated in Fig. 2. For example, the "first change method" for modifying the original first speed pattern 300 itself and the "second change method" for generating a new speed pattern different from the original first speed pattern 300 are considered. Regarding details of the change methods, the first change method is described below with reference to Fig. 3 and the second change method is described below with reference to Fig. 4.

Fig. 3 is a diagram describing the first change method for changing the speed pattern in the safety system changeover. In Fig. 3, in the first change method for modifying the original first speed pattern 300 itself, a method for reducing a moving speed at a limit 302 of movement authority of the moving block system (first safety system) is used.

Fig. 3 illustrates the position A, the position B, and the position C over time. At a time in the state A, the speed limit of the second speed pattern 301 is equal to or lower than the speed limit of the first speed pattern 300 at the position A of the train 104, and this state corresponds to YES in step S12 illustrated in Fig. 2.

In Fig. 3, the moving speed at the limit 302 of movement authority of the first speed pattern 300 is moved to a position behind an original limit 303 of movement authority by reducing the moving speed at the limit 302 of movement authority of the first speed pattern 300 as a modification of the first speed pattern 300 by the first change method, as indicated from the state B to the state C. Therefore, as indicated in the state C, the "first speed pattern 304 after the modification" that has a speed limit equal to or lower than the speed limit of the second speed pattern 301 at the position C of the train 104 is generated and applied to the first speed pattern (corresponding to steps S13 and S14 illustrated in Fig. 2 and YES in step S15 illustrated in Fig. 2). It is therefore possible to prevent an unplanned brake from being output when the first safety system is changed over to the second safety system in the state C.

On the other hand, for example, when the first control range 108 is the fixed block system and the second control range 109 is the moving block system, it is considered that the speed limit of the first speed pattern 300 is equal to or lower than the speed limit of the second speed pattern 301 at the position A of the train 104. Therefore, after the foregoing fact is confirmed (corresponding to NO in step S12 illustrated in Fig. 2), the first safety system can be changed over to the second safety system without outputting an unplanned brake.

Fig. 4 is a diagram describing the second change method for changing the speed pattern in the safety system changeover. In Fig. 4, as the second change method, a method for generating the new speed pattern (third speed pattern 400) different from the original first speed pattern 300 is used.

Specifically, when the speed limit of the second speed pattern 301 is equal to or lower than the speed limit of the first speed pattern 300 at the position of the train 104 (corresponding to YES in step S12 illustrated in Fig. 2), the new first speed pattern (third speed pattern 400) is generated so that the train 104 does not output an unplanned brake in association with the safety system changeover, and the first speed pattern 300 is changed over to the generated third speed pattern 400 and applied (corresponding to steps S13 and S14 illustrated in Fig. 2).

For example, in the third speed pattern 400 exemplified in Fig. 4, the speed limit of the first speed pattern 300 before the change is gradually reduced and is maintained at a level equal to or lower than the speed limit of the second speed pattern 301 (in a state in which the speed limit of the third speed pattern 400 is moved to the inward side with respect to the second speed pattern 301). In a process in which the speed is reduced from the speed limit of the first speed pattern 300 before the change, it is preferable to use normal brake output (or natural deceleration) so that a sudden brake is not output. According to the third speed pattern 400 generated in this manner, it can be expected that, before the changeover between the safety systems, the speed of the train 104 is suppressed to a level equal to or lower than the speed limit of the second speed pattern 301 applied after the changeover.

After that, after the fact that the speed limit of the applied third speed pattern 400 is equal to or lower than the speed limit of the second speed pattern 301 is confirmed (corresponding to YES in step S15 illustrated in Fig. 2), the safety system can be changed over without outputting an unplanned brake by changing over from the first safety system to the second safety system (corresponding to step S16 illustrated in Fig. 2).

### (3) Conclusion

As described above, according to the train control system 1 according to the present embodiment, when the train 104 travels in the control ranges 108 and 109 by the different safety systems, the safety system can be changed over without outputting an unplanned brake (for example, an emergency brake) by appropriately changing the speed pattern to avoid a state in which the speed patterns compete with each other before and after the changeover between the safety systems (more specifically, the speed limit after the changeover is equal to or lower than the speed limit before the changeover). Then, it is possible to improve passenger ride comfort, suppress energy loss caused by the traveling of the train 104, and efficiently control the operation by avoiding outputting an unplanned brake.

In the above description with reference to Fig. 2 and the like, the safety system changeover process is executed by the on-vehicle control device 105 of the on-vehicle system. However, the safety system changeover process by the train control system 1 according to the present embodiment is not limited to this. As another example, specifically, the ground control device 100 of the ground system may determine a limited of movement authority (LMA), and the on-vehicle control device 105 of the on-vehicle system may generate the speed patterns based on the determination. In addition, for example, the entire safety system changeover process may be executed by the execution of the ground control device 100 or the like. In each of the cases, when the train 104 travels in the control ranges 108 and 109 by the different safety systems, the effect in which the safety system is changed over without outputting an unplanned brake (for example, an emergency brake) can be obtained by the invention.

In addition, in the configuration that is among the foregoing configuration variations and in which the ground control device 100 executes the entire safety system changeover process, the safety system can be changed over by the ground system without an operation in the on-vehicle system. Therefore, the configuration is suitable when the train 104 is a self-driving vehicle.

In addition, since the time when the safety system changeover process according to the present embodiment is executed does not depend on the traveling state (traveling state or stopped state) of the train 104, it is not necessary to additionally execute delay control or the like and it is possible to achieve accurately planned train control.

In addition, the train control system 1 according to the present embodiment may be configured so that the speed patterns to be referenced, modified, or generated for the changeover between the safety systems are displayed on predetermined display units of the ground control device 100 and the on-vehicle control device 105. In the case where the display units are installed, an administrator, an operator, and the like can visually recognize the speed patterns applied to the train 104 and confirm that it is not necessary to output an unplanned brake in the changeover between the safety systems.

### (4) Modifications

The invention is not limited to the foregoing embodiment and can be variously changed and modified by a person skilled in the art within the scope of the claimed invention. In addition, the foregoing embodiment is an example to clearly explain the invention and may not include all the configurations described. In addition, another configuration can be added to, deleted from, or replaced with a part of the configurations described in the embodiment.

For example, wireless communication of information between the ground system and the on-vehicle system is not limited to communication executed using the ground-side antenna 101 and the on-vehicle antenna 106 as illustrated in Fig. 1 and may be executed using a coaxial leakage cable or the like without the antennas.

In addition, for example, the detection of the position of the train 104 is not limited to the detection using the track circuit (track circuit signal receiving device 107) illustrated in Fig. 1 and may be executed using an axle counter or the like other than the track circuit.

In addition, for example, the overlapping section (changeover section 110) of the control ranges to which the invention is applicable is not limited to the overlapping section of the two different control ranges and may be a section in which three or more different control ranges overlap each other. When the three or more control ranges overlap each other in the changeover section, the safety system changeover process exemplified in Fig. 2 may be executed using a speed pattern having the minimum speed limit as a standard among speed patterns for the control ranges (safety systems).

In addition, for example, a part of the equipment of the ground system may be installed in the on-vehicle system (on-vehicle control device 105) and information may be transmitted between devices of the on-vehicle system to control each train. Specifically, for example, a function of changing a speed pattern and a function of determining a limit of movement authority (LMA) are installed in the on-vehicle control device 105. While limits of movement authority are recognized by transmission of information between the on-vehicle control device and an on-vehicle control device of another train, the safety system changeover process can be executed in each of the trains.

The case where the first safety system is changed over to the second safety system in the state C is described with reference to the foregoing Fig. 3. However, for example, when the speed limit of the second speed pattern 301 is equal to or lower than the speed limit of the first speed pattern 300 at the position of the train 104 in the states A and B, and an emergency brake is not output even upon the changeover from the first speed pattern 300 to the second speed pattern 301, the safety system may be quickly changed over. Specifically, for example, it is considered that the actual traveling speed of the train 104 is equal to or lower than the speed limit of the second speed pattern 301, differently from the result of comparing the speed patterns with each other. When the changeover is executed in this case, the safety system can be safely and flexibly changed over.

### List of Reference Signs

- 1: Train control system
- 100: Ground control device
- 101: Ground-side antenna
- 102: Train information
- 103: Control information
- 104: Train
- 105: On-vehicle control device
- 106: On-vehicle-side antenna
- 107: Track circuit signal receiving device
- 108: First control range
- 109: Second control range
- 110: Changeover section
- 300: First speed pattern
- 301: Second speed pattern
- 303: Original limit of movement authority
- 304: First speed pattern after modification
- 400: Third speed pattern

## Claims

1. A train control system (1) for controlling a train (104) in accordance with speed patterns indicating relationships between a traveling position of the train that travels on a track and a speed limit at the traveling position, wherein
the speed patterns are set for respective safety systems having control ranges (108, 109) allocated to the track,
the safety systems include a first safety system having a first speed pattern (300) and a second safety system having a second speed pattern (301),
when the safety system used to control the train is to be changed over from the first safety system to the second safety system at a first position within a control section (110) in which the control ranges (108, 109) overlap each other, and a speed limit of the first speed pattern and a speed limit of the second speed pattern compete with each other at the first position, the first speed pattern is changed so that a speed limit at a second position ahead of the first position within the overlapping control section is equal to or lower than the speed limit of the second speed pattern, and after the first speed pattern after the change is applied, the safety system is changed over from the first safety system to the second safety system.

2. The train control system according to claim 1, wherein
when the speed limit of the second speed pattern (301) is equal to or lower than the speed limit of the first speed pattern (300) at the first position, the first speed pattern is changed by reducing a moving speed at a limit of movement authority of the first speed pattern.

3. The train control system according to claim 1, wherein
when it is confirmed that the speed limit of the first speed pattern (300) after the change is equal to or lower than the speed limit of the second speed pattern (301) at any of positions ahead of the first position within the overlapping control section after the first speed pattern after the change is applied, the safety system is changed over from the first safety system to the second safety system.

4. The train control system according to claim 1, wherein
the first speed pattern (300) after the change is a speed pattern obtained by modifying the first speed pattern itself.

5. The train control system according to claim 1, wherein
the first speed pattern (300) after the change is a newly generated speed pattern different from the first speed pattern.

6. The train control system according to claim 1, wherein
the first safety system is a moving block system and the second safety system is a fixed block system.

7. The train control system according to claim 1, wherein
the first safety system is a fixed block system and the second safety system is a moving block system.

8. The train control system according to claim 1, comprising:
a ground system control device (100) that controls the train in accordance with the safety systems; and
a on-vehicle system control device (105) that is attached to the train and operates the train (104), wherein
the ground system control device or the on-vehicle system control device controls the changing of the first speed pattern, and
the ground system control device controls the changeover between the safety systems.

9. The train control system according to claim 8, wherein
at least one of the ground system control device (100) and the on-vehicle system control device (105) includes a display unit that displays the first speed pattern, the second speed pattern, and the first speed pattern after the change.

10. A train control method for controlling a train (104) in accordance with speed patterns indicating relationships between a traveling position of the train that travels on a track and a speed limit at the traveling position, wherein
the speed patterns are set for respective safety systems having control ranges allocated to the track,
the safety systems include a first safety system having a first speed pattern (300) and a second safety system having a second speed pattern (301), and
the method comprises, when the safety system used to control the train is to be changed over from the first safety system to the second safety system at a first position within a control section (110) in which the control ranges overlap each other, and a speed limit of the first speed pattern and a speed limit of the second speed pattern compete with each other at the first position, a speed pattern change step of changing the first speed pattern so that a speed limit at a second position ahead of the first position within the overlapping control section is equal to or lower than the speed limit of the second speed pattern; and a safety system changeover step of changing over from the first safety system to the second safety system after the first speed pattern after the change is applied.

11. The train control method according to claim 10, wherein
in the speed pattern change step, when the speed limit of the second speed pattern (301) is equal to or lower than the speed limit of the first speed pattern (300) at the first position, the first speed pattern is changed by reducing a moving speed of a limit of movement authority of the first speed pattern.

12. The train control method according to claim 10, wherein
in the safety system changeover step, when it is confirmed that the speed limit of the first speed pattern (300) after the change is equal to or lower than the speed limit of the second speed pattern (301) at any of positions ahead of the first position within the overlapping control section after the first speed pattern after the change by the speed pattern change step is applied, the safety system is changed over from the first safety system to the second safety system.

13. The train control method according to claim 10, wherein
the first safety system is a moving block system and the second safety system is a fixed block system.

14. The train control method according to claim 10, wherein
the first safety system is a fixed block system and the second safety system is a moving block system.

15. The train control method according to claim 10, further comprising:
a display step of displaying the first speed pattern, the second speed pattern, and the first speed pattern after the change on a predetermined display unit.

## Patentansprüche

1. Zugsteuersystem (1) zum Steuern eines Zugs (104) gemäß Geschwindigkeitsmustern, die Beziehungen zwischen einer Fortbewegungsposition des Zugs, der sich auf einem Gleis fortbewegt, und eines Geschwindigkeitsgrenzwerts in der Fortbewegungsposition angeben, wobei
die Geschwindigkeitsmuster für entsprechende Sicherheitssysteme, die dem Gleis zugewiesene Steuerbereiche (108, 109) aufweisen, eingestellt sind,
wobei die Sicherheitssysteme ein erstes Sicherheitssystem mit einem ersten Geschwindigkeitsmuster (300) und ein zweites Sicherheitssystem mit einem zweiten Geschwindigkeitsmuster (301) umfassen,
wobei, wenn das Sicherheitssystem, das zum Steuern des Zugs verwendet wird, in einer ersten Position in einem Steuerabschnitt (110), in dem die Steuerbereiche (108, 109) einander überlappen, vom ersten Sicherheitssystem auf das zweite Sicherheitssystem umgestellt werden soll und der Geschwindigkeitsgrenzwert des ersten Geschwindigkeitsmusters mit dem Geschwindigkeitsgrenzwert des zweiten Geschwindigkeitsmusters in der ersten Position konkurriert, das erste Geschwindigkeitsmuster so geändert wird, dass der Geschwindigkeitsgrenzwert innerhalb des überlappenden Steuerabschnitts in einer zweiten Position, die vor der ersten Position liegt, gleich wie oder kleiner als der Geschwindigkeitsgrenzwert des zweiten Geschwindigkeitsmusters ist und wobei das Sicherheitssystem vom ersten Sicherheitssystem auf das zweite Sicherheitssystem umgestellt wird, nachdem das erste Geschwindigkeitsmuster nach der Änderung angewandt wurde.

2. Zugsteuersystem nach Anspruch 1, wobei wenn der Geschwindigkeitsgrenzwert des zweiten Geschwindigkeitsmusters (301) gleich wie oder kleiner als der Geschwindigkeitsgrenzwert des ersten Geschwindigkeitsmusters (300) in der ersten Position ist, das erste Geschwindigkeitsmuster durch Reduzieren einer Bewegungsgeschwindigkeit an einer Fahrtfreigabegrenze des ersten Geschwindigkeitsmusters geändert wird.

3. Zugsteuersystem nach Anspruch 1, wobei, wenn bestätigt wird, dass der Geschwindigkeitsgrenzwert des ersten Geschwindigkeitsmusters (300) nach der Änderung in einer beliebigen Position vor der ersten Position innerhalb des überlappenden Steuerabschnitts, nachdem das erste Geschwindigkeitsmuster nach der Änderung angewendet wurde, gleich wie oder kleiner als der Geschwindigkeitsgrenzwert des zweiten Geschwindigkeitsmusters (301) ist, das Sicherheitssystem vom ersten Sicherheitssystem auf das zweite Sicherheitssystem umgestellt wird.

4. Zugsteuersystem nach Anspruch 1, wobei das erste Geschwindigkeitsmuster (300) nach der Änderung ein Geschwindigkeitsmuster ist, das durch Ändern des ersten Geschwindigkeitsmusters selbst erhalten wird.

5. Zugsteuersystem nach Anspruch 1, wobei das erste Geschwindigkeitsmuster (300) nach der Änderung ein neu generiertes Geschwindigkeitsmuster ist, das sich vom ersten Geschwindigkeitsmuster unterscheidet.

6. Zugsteuersystem nach Anspruch 1, wobei das erste Sicherheitssystem ein sich bewegendes Blocksystem und das zweite Sicherheitssystem ein fixiertes Blocksystem ist.

7. Zugsteuersystem nach Anspruch 1, wobei das erste Sicherheitssystem ein fixiertes Blocksystem und das zweite Sicherheitssystem ein sich bewegendes Blocksystem ist.

8. Zugsteuersystem nach Anspruch 1, Folgendes umfassend:
eine Bodensystemsteuervorrichtung (100), die den Zug gemäß den Sicherheitssystemen steuert; und
eine Fahrzeugsystemsteuervorrichtung (105), die auf dem Zug befestigt ist und den Zug (104) betreibt, wobei
die Bodensystemsteuervorrichtung oder die Fahrzeugsystemsteuervorrichtung die Änderung des ersten Geschwindigkeitsmusters steuert und
die Bodensystemsteuervorrichtung die Umstellung zwischen den Sicherheitssystemen steuert.

9. Zugsteuersystem nach Anspruch 8, wobei zumindest eine der Bodensystemsteuervorrichtung (100) und der Fahrzeugsystemsteuervorrichtung (105) eine Anzeigeeinheit umfasst, die das erste Geschwindigkeitsmuster, das zweite Geschwindigkeitsmuster und das erste Geschwindigkeitsmuster nach der Änderung anzeigt.

10. Zugsteuerverfahren zum Steuern eines Zugs (104) gemäß Geschwindigkeitsmustern, die Beziehungen zwischen einer Fortbewegungsposition des Zugs, der sich auf einem Gleis fortbewegt, und einem Geschwindigkeitsgrenzwert in der Fortbewegungsposition angeben, wobei
die Geschwindigkeitsmuster für entsprechende Sicherheitssysteme, die dem Gleis zugewiesene Steuerbereiche aufweisen, eingestellt sind,
wobei die Sicherheitssysteme ein erstes Sicherheitssystem mit einem ersten Geschwindigkeitsmuster (300) und ein zweites Sicherheitssystem mit einem zweiten Geschwindigkeitsmuster (301) umfassen und
wobei, das Verfahren, wenn das Sicherheitssystem, das zum Steuern des Zugs verwendet wird, in einer ersten Position innerhalb eines Steuerabschnitts (110), in dem die Steuerbereiche einander überlappen, vom ersten Sicherheitssystem auf das zweite Sicherheitssystem umgestellt werden soll und der Geschwindigkeitsgrenzwert des ersten Geschwindigkeitsmusters mit dem Geschwindigkeitsgrenzwert des zweiten Geschwindigkeitsmusters in der ersten Position konkurriert, einen Geschwindigkeitsmusteränderungsschritt des derartigen Änderns des ersten Geschwindigkeitsmuster, dass der Geschwindigkeitsgrenzwert im überlappenden Steuerabschnitt in einer zweiten Position, die vor der ersten Position liegt, gleich wie oder kleiner ist als der Geschwindigkeitsgrenzwert des zweiten Geschwindigkeitsmusters; und einen Sicherheitssystemumstellschritt des Umstellens vom ersten Sicherheitssystem auf das zweite Sicherheitssystem, nachdem das erste Geschwindigkeitsmuster der Änderung angewandt wurde, umfasst.

11. Zugsteuerverfahren nach Anspruch 10, wobei im Geschwindigkeitsmusteränderungsschritt, wenn der Geschwindigkeitsgrenzwert des zweiten Geschwindigkeitsmusters (301) gleich wie oder kleiner als der Geschwindigkeitsgrenzwert des ersten Geschwindigkeitsmusters (300) in der ersten Position ist, das erste Geschwindigkeitsmuster durch Reduzieren einer Bewegungsgeschwindigkeit an einer Fahrtfreigabegrenze des ersten Geschwindigkeitsmusters geändert wird.

12. Zugsteuerverfahren nach Anspruch 10, wobei im Sicherheitssystemumstellschritt, wenn bestätigt wird, dass der Geschwindigkeitsgrenzwert des ersten Geschwindigkeitsmusters (300) nach der Änderung in einer beliebigen Position vor der ersten Position innerhalb des überlappenden Steuerabschnitts, nachdem das erste Geschwindigkeitsmuster nach der Änderung angewendet wurde, gleich wie oder kleiner als der Geschwindigkeitsgrenzwert des zweiten Geschwindigkeitsmusters (301) ist, das Sicherheitssystem vom ersten Sicherheitssystem auf das zweite Sicherheitssystem umgestellt wird.

13. Zugsteuerverfahren nach Anspruch 10, wobei das erste Sicherheitssystem ein sich bewegendes Blocksystem und das zweite Sicherheitssystem ein fixiertes Blocksystem ist.

14. Zugsteuerverfahren nach Anspruch 10, wobei das erste Sicherheitssystem ein fixiertes Blocksystem und das zweite Sicherheitssystem ein sich bewegendes Blocksystem ist.

15. Zugsteuerverfahren nach Anspruch 10, ferner Folgendes umfassend:
einen Anzeigeschritt des Angebens des ersten Geschwindigkeitsmusters, des zweiten Geschwindigkeitsmusters und des ersten Geschwindigkeitsmusters nach der Änderung auf einer vorbestimmten Anzeigeeinheit.

## Revendications

1. Système de commande de train (1) destiné à commander un train (104) conformément à des schémas de vitesse indiquant des relations entre une position de déplacement du train qui se déplace sur un parcours et une limite de vitesse au niveau de la position de déplacement, dans lequel
les schémas de vitesse sont établis pour des systèmes de sécurité respectifs présentant des plages de commande (108, 109) attribuées au parcours,
les systèmes de sécurité comprennent un premier système de sécurité ayant un premier schéma de vitesse (300) et un second système de sécurité ayant un second schéma de vitesse (301),
lorsque le système de sécurité utilisé pour commander le train doit être basculé du premier système de sécurité au second système de sécurité dans une première position à l'intérieur d'une section de commande (110) dans laquelle les plages de commande (108, 109) se chevauchent mutuellement, et une limite de vitesse du premier schéma de vitesse et une limite de vitesse du second schéma de vitesse entrent en concurrence l'une avec l'autre dans la première position, le premier schéma de vitesse est changé de sorte qu'une limite de vitesse dans une seconde position en avant de la première position à l'intérieur de la section de commande de chevauchement est égale ou inférieure à la limite de vitesse du second schéma de vitesse, et après application du premier schéma de vitesse après le changement, le système de sécurité est basculé du premier système de sécurité au second système de sécurité.

2. Système de commande de train selon la revendication 1, dans lequel
lorsque la limite de vitesse du second schéma de vitesse (301) est égale ou inférieure à la limite de vitesse du premier schéma de vitesse (300) dans la première position, le premier schéma de vitesse est changé en réduisant une vitesse de déplacement à une limite d'autorisation de déplacement du premier schéma de vitesse.

3. Système de commande de train selon la revendication 1, dans lequel
lorsqu'il est confirmé que la limite de vitesse du premier schéma de vitesse (300) après le changement est égale ou inférieure à la limite de vitesse du second schéma de vitesse (301) dans l'une quelconque des positions en avant de la première position à l'intérieur de la section de commande de chevauchement après application du premier schéma de vitesse après le changement, le système de sécurité est basculé du premier système de sécurité au second système de sécurité.

4. Système de commande de train selon la revendication 1, dans lequel
le premier schéma de vitesse (300) après le changement est un schéma de vitesse obtenu en modifiant le premier schéma de vitesse lui-même.

5. Système de commande de train selon la revendication 1, dans lequel
le premier schéma de vitesse (300) après le changement est un schéma de vitesse nouvellement généré différent du premier schéma de vitesse.

6. Système de commande de train selon la revendication 1, dans lequel
le premier système de sécurité est un système de blocs mobiles et le second système de sécurité est un système de blocs fixes.

7. Système de commande de train selon la revendication 1, dans lequel
le premier système de sécurité est un système de blocs fixes et le second système de sécurité est un système de blocs mobiles.

8. Système de commande de train selon la revendication 1, comprenant :
un dispositif de commande de système au sol (100) qui commande le train conformément aux systèmes de sécurité ; et
un dispositif de commande de système embarqué (105) qui est fixé au train et fait fonctionner le train (104), dans lequel
le dispositif de commande de système au sol ou le dispositif de commande de système embarqué commande le changement du premier schéma de vitesse, et
le dispositif de commande de système au sol commande le basculement entre les systèmes de sécurité.

9. Système de commande de train selon la revendication 8, dans lequel
au moins un parmi le dispositif de commande de système au sol (100) et le dispositif de commande de système embarqué (105) comprend une unité d'affichage qui affiche le premier schéma de vitesse, le second schéma de vitesse, et le premier schéma de vitesse après le changement.

10. Procédé de commande de train pour commander un train (104) conformément à des schémas de vitesse indiquant des relations entre une position de déplacement du train qui se déplace sur un parcours et une limite de vitesse dans la position de déplacement, dans lequel
les schémas de vitesse sont établis pour des systèmes de sécurité respectifs ayant des plages de commande attribuées au parcours,
les systèmes de sécurité comprennent un premier système de sécurité ayant un premier schéma de vitesse (300) et un second système de sécurité ayant un second schéma de vitesse (301), et
le procédé comprend, lorsque le système de sécurité utilisé pour commander le train doit être basculé du premier système de sécurité au second système de sécurité dans une première position à l'intérieur d'une section de commande (110) dans laquelle les plages de commande se chevauchent mutuellement, et une limite de vitesse du premier schéma de vitesse et une limite de vitesse du second schéma de vitesse entrent en concurrence l'une avec l'autre dans la première position, une étape de changement de schéma de vitesse consistant à changer le premier schéma de vitesse de telle sorte qu'une limite de vitesse dans une seconde position en avant de la première position à l'intérieur de la section de commande de chevauchement est égale ou inférieure à la limite de vitesse du second schéma de vitesse ; et une étape de basculement de système de sécurité consistant à basculer du premier système de sécurité au second système de sécurité après application du premier schéma de vitesse après le changement.

11. Procédé de commande de train selon la revendication 10, dans lequel
dans l'étape de changement de schéma de vitesse, lorsque la limite de vitesse du second schéma de vitesse (301) est égale ou inférieure à la limite de vitesse du premier schéma de vitesse (300) dans la première position, le premier schéma de vitesse est changé en réduisant une vitesse de déplacement d'une limite d'autorisation de déplacement du premier schéma de vitesse.

12. Procédé de commande de train selon la revendication 10, dans lequel
dans l'étape de basculement de système de sécurité, lorsqu'il est confirmé que la limite de vitesse du premier schéma de vitesse (300) après le changement est égale ou inférieure à la limite de vitesse du second schéma de vitesse (301) dans l'une quelconque des positions en avant de la première position à l'intérieur de la section de commande de chevauchement après application du premier schéma de vitesse après le changement par l'étape de changement de schéma de vitesse, le système de sécurité est basculé du premier système de sécurité au second système de sécurité.

13. Procédé de commande de train selon la revendication 10, dans lequel
le premier système de sécurité est un système de blocs mobiles et le second système de sécurité est un système de blocs fixes.

14. Procédé de commande de train selon la revendication 10, dans lequel
le premier système de sécurité est un système de blocs fixes et le second système de sécurité est un système de blocs mobiles.

15. Procédé de commande de train selon la revendication 10, comprenant en outre :
une étape d'affichage consistant à afficher le premier schéma de vitesse, le second schéma de vitesse, et le premier schéma de vitesse après le changement sur une unité d'affichage prédéterminée.
